# EUROPEAN PATENT SPECIFICATION

(11) **EP 3 222 930 B1**
(45) Date of publication and mention of the grant of the patent: **27.02.2019**
(21) Application number: 17161807.7
(22) Date of filing: 20.03.2017
(51) Int. Cl.: F24S 20/20, F21S 11/00, G01S 3/786

(54) **SOLAR LIGHTING SYSTEM AND METHOD FOR CONTROLLING A SOLAR LIGHTING SYSTEM**
SOLARBELEUCHTUNGSSYSTEM UND VERFAHREN ZUR STEUERUNG EINES SOLARBELEUCHTUNGSSYSTEMS
SYSTÈME D'ÉCLAIRAGE SOLAIRE ET PROCÉDÉ DE COMMANDE DUDIT SYSTÈME

(30) Priority: 22.03.2016 SE 1650377
(43) Date of publication of application: 27.09.2017
(73) Proprietor: Solros AB, 412 60 Göteborg (SE)
(72) Inventor: Ramstedt, Jon, 412 60 Göteborg (SE); Johansson, Daniel, 414 67 Göteborg (SE)
(74) Representative: AWA Sweden AB

(56) References cited:
- EP-A2- 0 295 152
- CN-C- 1 086 800
- DE-A1-102011 114 743
- JP-A- H1 172 324
- JP-U- H0 741 845
- JP-U- H03 122 401
- US-A- 4 297 000

## Description

### TECHNICAL FIELD OF THE INVENTION

The present invention relates to a natural lighting apparatus using sunlight and, more specifically, the present invention relates to a solar lighting system having a solar light tracking system.

### BACKGROUND

Lighting is one of the largest factors affecting the productivity and wellbeing of humans working indoors. There is a trend to improve lighting to mimic natural sunlight, both in intensity as well as spectral composition, for the purpose of reducing stress related diseases and providing a comfortable indoor environment.

Further, regulations require that a certain amount of natural sunlight reaches into e.g. office buildings. This consequently adds to the cost and limits the possible technical and architectural solutions.

Efforts have been made by combining light sources having different wavelengths, or partially converting the wavelength of the light from a monochromatic light source, however, these solutions may be complex, require expensive materials and/or be rather delicate. Furthermore, generation of electricity and the conversion of electricity to light reduce ideal efficiency.

Another conventional solution is to catch the natural sunlight during daytime and direct or guide it, via an optical duct, into the building using a solar lighting system. However, presently known solutions within this area are generally complex and large, and therefore often require large investments for manufacturing and installation.

Furthermore, it has been proven that cost-efficient and simple solutions for accurately tracking the solar path and appropriately directing the solar ray receiving component (e.g. solar reflector, Fresnel lens or the like), are very hard to realize. Oftentimes, very advanced and therefore expensive sensor arrangements mounted close to or onto the light receiving component are used to detect the direction of incident solar rays in reference to the light receiving component in order to determine the position of the sun. The light receiving component is subsequently moved and arranged such that it is facing a desired direction based on sensory information in order to properly re-direct the solar rays towards an intended target.

CN 1 086 800 C discloses a known solar lighting system according to the preamble of claim 1. EP 0 295 152 A2, JP H11 72324 A and JP H03 122401 U disclose other known solar lighting systems with solar tracking means.

However, even if it is possible to track the sun with adequate accuracy, it has been found that it is troublesome to accurately determine the position of the sun and to relate this position with an angular deviation of the re-directed solar rays. Consequently, it is very difficult to accurately align e.g. a parabolic solar reflector or a lens in an optimal position, such that the re-directed light is aimed at an intended target (e.g. a light guide).

There is therefore a need for an improved system for providing natural light indoors which is simple, energy-efficient and at the same time cost-efficient.

### SUMMARY

It is therefore an object of the present invention to provide a solar lighting system and method which alleviates all or at least some of the above-discussed drawbacks with presently known systems.

This object is achieved by means of a solar lighting system and a method as defined in the appended claims. The term exemplary is in the following to be interpreted as; serving as an example, instance, or illustration.

According to a first aspect of the present invention there is provided a solar lighting system comprising:
a solar reflector for reflecting incident solar rays;
an actuator configured to move the solar reflector in order to change a direction that the solar reflector is facing;
a solar collector arranged to receive reflected solar rays from the solar reflector, the solar collector comprising a light guide array comprising at least two light guides;
a control unit connected to the actuator;
a solar light sensor connected to the control unit, wherein the solar light sensor is arranged to face the same direction as the solar reflector and configured to detect a position of the sun based on a direction of the incident solar rays in order to generate a direction signal, wherein the control unit is configured to control the actuator based on the direction signal such that the solar reflector is facing towards the sun;
at least one calibration sensor being connected to the control unit and arranged in optical contact with one of the at least two light guides, wherein the at least one calibration sensor is configured to detect an intensity of light received by the light guide and generate a calibration signal to the control unit;
wherein the control unit is configured to calibrate the direction signal based on the calibration signal, in order to ensure that the light guides of the solar collector receives light.

The solar lighting system is cost-efficient and simple, and increases the amount of sunlight caught during an entire day by improving the accuracy of the solar light sensor and consequently of the detected direction of the incident solar rays.

The solar light sensor may for example be a position sensitive device, PSD, (also known as position sensitive detector or optical position sensor, OPS) which is a sensor that can measure/detect a position of a light spot in one or two dimensions on a sensor surface, whereby a direction of incident light or a position of a light source can be detected/measured. The calibration sensors can be any photo sensor or photo detector capable of detecting light in any portion of the full electromagnetic spectrum, from infrared wave lengths to ultra violet wave lengths, such as e.g. photo diodes, photo transistors, photo voltaic cells, photo resistors, and so on. Other alternatives embodiments include image sensors such as, e.g. charge coupled device sensors (CCD sensors), complementary metal-oxide-semiconductor sensors (CMOS sensors), etc.

It goes without saying that a calibration sensor in optical contact with a light guide is to be understood as being arranged in a manner such that the intensity of received light in one light guide (e.g. optical fiber) can be detected by the calibration sensor, and that the intensity of the received light can directly or indirectly be derived from an output signal of the calibration sensor. Stated differently, the calibration sensor may be placed or positioned such that it receives light that can be representative of the light a light guide receives. The calibration sensor can be integrated in the light guide or at least arranged in optical contact with the light guide. Thus, in an embodiment of the invention each calibration sensor is arranged within or in direct contact with an associated light guide in order to detect an intensity of light received by the associated light guide.

The phrase to face a direction is to be interpreted as to have the front side or surface turned in a specific direction. In the context of a solar reflector facing towards the sun, it simply means that the reflective surface of the solar reflector is turned towards the general direction of the sun. The expression facing the sun should be interpreted as a deviation of ± 10 degrees from being directly directed towards the sun. Thus, the solar light sensor is arranged to have its front surface (i.e. the active surface intended to receive light) facing in the same general direction as the reflective surface of the solar reflector. In one exemplary embodiment, the solar reflector is a concentrating solar reflector, such as e.g. a parabolic solar reflector, a solar mirror array, or the like, configured to reflect incident solar rays towards a focal point.

Conventionally, in order to provide for accurate solar tracking, rather advanced and therefore expensive sensor arrangements are required for accurately detecting the direction of incident solar rays. The solar reflector's position (i.e. the direction that it is facing) is adjusted such that it faces the sun based on the determined direction of the incident solar rays. As discussed in the background section, it is furthermore known that even if the direction of the incident solar rays can be detected with adequate accuracy it is extremely difficult to relate this detected direction with an angular deviation of the reflected solar rays, i.e. that all light guides actually receive light. If the solar reflector's facing direction deviates even a few tenths of one degree from facing directly towards the sun, it reduces the amount of light hitting the light guides which decreases the overall efficiency of the solar lighting system. This is because solar lighting systems are generally arranged such that good efficiency is achieved when the solar reflector is facing directly towards the sun, in other words, if the facing direction of the solar reflector deviates, the focal point of the reflector is shifted and some light guides are not properly illuminated by the reflected solar rays.

However, the inventors of the present invention realized that by arranging at least one light sensors (calibration sensor) in one of the light guides, which are arranged at the solar collector, one can realize a more simple and cost-efficient system which is capable of accurately tracking the position of the sun. Moreover, the system is self calibrating which means that it can continuously track the sun and the calibration sensors effectively provide the control unit with an optimal angular position of the solar reflector in reference to the sun, whereby the control unit can adjust the position of the solar reflector accordingly and the amount of sun caught during a day can be maximized. Moreover, the need for calibrating the system and the solar light sensors during manufacturing is diminished as the system continuously updates itself. This means that a less expensive and accurate solar detector may be used, and the calibration of the solar detector is no longer of paramount importance. Further, a calibration made during manufacturing proved oftentimes to be erroneous once the system was actually installed and operational, which drastically reduced the overall efficiency of the system and created a need for costly re-calibrations.

In use, the solar light sensor is used in a first solar tracking step to determine the direction of the sun, in other words, a direction signal indicative of the direction of incident solar rays is generated and sent to the control unit. This information is used to determine if the solar reflector is facing the sun or not, and in case of the latter, the position of the solar reflector is adjusted accordingly by the actuator(s). Next, a calibration step is employed where the at least one calibration sensor arranged in a light guide, is used to measure how much of the received light is being reflected towards the solar collector (and the light guides) whereby one can determine if the reflected light reaches all of the light guides. In the exemplary embodiment where only one single calibration sensor is used the calibration sensor is preferably arranged in a predefined position in a light guide array and capable of detecting differences in intensity of the reflected solar light. The control unit can accordingly be configured to sweep the reflected "bright spot" across the light guide array whereby the calibration sensor can provide an output indicative of the size and shape of the bright spot and its position in reference to the calibration sensor's position, which allows the control unit to appropriately calibrate the direction signal such that each light guide of the plurality of light guides receives light. In other words, it can be said that the calibration sensor is used to determine an optimal position of the solar reflector in reference to the sun and the solar light sensor is calibrated accordingly.

This consequently ensures (in ideal conditions) that a maximum amount of reflected light is always directed towards the light guides in a cost-efficient and simple manner. Thus, the need for having advanced sensory equipment for solar tracking purposes is diminished; instead, by employing a set of calibration sensors a more basic and cost-efficient solar light sensor (e.g. a position sensitive detector, PSD) can be used since it is continuously and very accurately calibrated. In other words, the system is a self-calibrating solar lighting system. Furthermore there is no need to have sensor arrangements installed at an end-point of the system (e.g. inside the room to which the light is eventually guided), and since all of the components are gathered in one place the installation and maintenance of the system is facilitated.

According to one exemplary embodiment, the solar collector includes a light receiving surface comprising an entry point for each light guide and wherein the light receiving surface is arranged between the concentrating solar reflector and the focal point. When the solar reflector is correctly positioned in reference to the sun, a "bright spot" of reflected light covers each entry point of the light guides. The light receiving surface may alternatively be arranged "behind" the focal point, in other words, the focal point can be in a space between the concentrating solar reflector and the solar collector. By adjusting the position of the light receiving surface in reference to the concentrating solar reflector and the focal point the size of the bright spot reflected onto the light receiving surface can be controlled. For example, by moving the light receiving surface further away from the focal point (either towards the reflector or away from the reflector, towards the sun) the area of the bright spot increases. Thus, the system can appropriately be adjusted according to the amount of light guides in the solar collector, i.e. such that the size of the bright spot is chosen to just about cover all of the entry points of the light guides in order to increase (maximize) the amount of light reflected into the light guides.

The light guide array comprised by the solar collector can for example include at least seven light guides arranged in a hexagonal packing structure, such as e.g. 19 light guides or 37 light guides. The hexagonal packing structure is in reference to the circular entry point surfaces of the light guides disposed on the light receiving surface of the solar collector. This ensures a high ratio of light guides per area unit.

In accordance with an exemplary embodiment, the system comprises at least two calibration sensors each arranged in optical contact with separate light guides of the at least two light guides, wherein each calibration sensor is configured to detect an intensity of light and to generate a calibration signal to the control unit, wherein the control unit is configured to calibrate the solar light sensor based on the calibration signal.

This allows for a more robust system and cost-efficient system, because, by using two calibration sensors the sensitivity requirements for the calibration sensors are lower which allows for more employment of cheaper sensors. The two calibration sensors can be arranged in separate light guides, preferably in non-adjacent separate peripheral light guides at opposite ends of the light guide array. The calibration signal from each calibration sensor may be combined in the control unit, or the control may calculate a mean or median calibration signal from the two or more calibration signals. Alternatively, the control unit may use each calibration signal independently to calibrate the direction signal.

If the receiving surface of the solar collector is approximated as a two dimensional surface having a y-axis and an x-axis, the two calibration sensors can be configured to detect variations in intensity along the x-axis and along the y-axis by sweeping a reflected bright spot across the light receiving surface. The solar light sensor, or rather the direction signal, is accordingly calibrated based on a determined size and position of the bright spot formed by the reflected light on the light receiving surface of the solar collector. The determined size is derived based on the output of the calibration sensors and their (predefined) position in the light guide array.

In another exemplary embodiment, the light guide array comprises at least three light guides, and the solar lighting system comprises at least three calibration sensors each arranged in optical contact with separate light guides arranged on the periphery of the light guide array. Each calibration sensor is configured to detect an intensity of light and to generate a calibration signal to the control unit, wherein the control unit is configured to calibrate the direction signal based on the calibration signal.

By having three calibration sensors (or more) arranged in separate peripheral light guides, the total system can be made more robust and cost-efficient. The calibration sensors are preferably arranged in non-adjacent separate peripheral light guides at different ends/sides of the light guide array, e.g. a hexagonal array has six different ends/sides. When using three or more calibration sensors, it isn't necessary to use sensors that are able to detect small differences in intensity as described above (which generally requires more advanced and thus more expensive light sensors). Instead, one can use rather basic and cheap light sensors only capable of providing a binary output (i.e. light is being detected or not). This is due to the fact that by arranging the three or more calibration sensors in separate peripheral light guides at different ends of the light guide array, one can assume that if all of the sensors are receiving light then all of the light guides are receiving light. The calibration signal from each calibration sensor may be combined in the control unit, or the control may calculate a mean or median calibration signal from the three calibration signals. Alternatively, the control unit may use each calibration signal independently to calibrate the direction signal.

Further, in accordance with another exemplary embodiment, the control unit comprises processing circuitry configured to calculate a solar path and determine an expected position of the sun based on at least one of a time of day, a date, a latitudinal position of the solar lighting system and a longitudinal position of the solar lighting system, and wherein the control unit is further configured to control the actuator(s) based on the determined position of the sun such that said solar reflector is facing towards the expected position of the sun. This provides the system with means to determine a rough estimate of the position of the sun. This is advantageous for example in order to properly adjust the position of the solar reflector before sunrise or to track the sun during overcast periods of the day.

In at least one exemplary embodiment, the solar lighting system further comprises an additional actuator for moving the solar reflector. The actuator may be a linear actuator to control the facing of the solar reflector in vertically oriented plane, and the additional actuator may be a motor which, by rotation, controls the facing of the solar reflector in a horizontal plane.

According to another aspect of the present invention there is provided a method for calibration and control of a solar lighting system comprising a solar reflector for reflecting incident solar rays, a solar light sensor, and a solar collector arranged to receive solar rays reflected by the solar reflector, wherein the solar collector comprises a light guide array including at least two light guides, the method comprising:
detecting a direction of the incident solar rays by means of the solar light sensor and providing a direction signal indicative of the direction of the incident solar rays;
moving the solar reflector based on the direction signal in order to arrange the solar reflector such that the solar reflector is facing towards the sun;
detecting an intensity of light received by at least one light guide in the solar collector;
calibrating the direction signal based on the detected intensity of light received by said at least one light guide in the solar collector, in order to ensure that each light guide of the at least two light guides receives solar light.

With this aspect of the invention, similar advantages and preferred features are present as in the previously discussed first aspect of the invention.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a side view of a solar lighting system with an added perspective view of a solar collector, in accordance with an embodiment of the present invention;
Figs. 2a-b are front views of a light receiving surface of a solar collector illustrating a calibration sequence in accordance with an embodiment of the present invention;
Figs. 3a-b are front view of a light receiving surface of a solar collector illustrating a calibration sequence in accordance with another embodiment of the present invention;
Fig. 4a is a schematic side view of a concentrating solar reflector and a solar collector showing the position of the solar collector in reference to the concentrating solar collector and its focal point in accordance with an embodiment of the present invention;
Fig. 4b is a close-up schematic illustration of the position of a light receiving surface of the solar collector in reference to the focal point of the concentrating solar reflector as shown in Fig. 4a;
Fig. 4c is a close-up schematic illustration of the position of a light receiving surface of a solar collector and a focal point of the a concentrating solar reflector in accordance with another exemplary embodiment of the invention;
Fig. 5 is a flow-chart representation of a method for calibration and control of a solar lighting system in accordance with an embodiment of the present invention.

### DETAILED DESCRIPTION

In the following detailed description, embodiments of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations of the invention. Even though in the following description, numerous specific details are set forth to provide a more thorough understanding of e present invention, it will be apparent to one skilled in the art that the present invention may be practiced without these specific details. In other instances, well known constructions or functions are not described in detail, so as not to obscure the present invention.

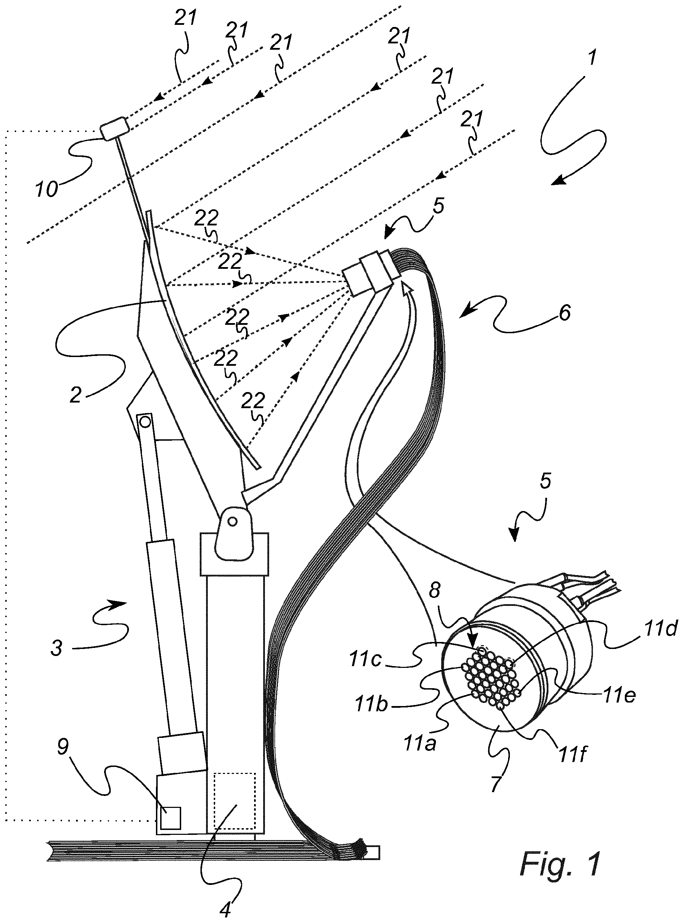

In Fig. 1, a side-view of a solar lighting system 1 in accordance with an exemplary embodiment of the invention is provided. Fig. 1a also shows an additional enlarged perspective view of a solar collector 5. The solar lighting system 1 has a solar reflector 2, here in the form of a parabolic dish. Incident solar 21 rays are reflected against the solar reflector 2. The solar reflector 2 preferably has a reflective surface, e.g. a polished metallic surface. The solar reflector 2 may be made of metal. Alternatively, the solar reflector 2 may be made of another material which is reflective, or a non-reflective material which is coated by a reflective material. The solar reflector 2 is moved by means of an actuator 3, schematically illustrated as a linear actuator attached to a back portion of the solar reflector 2. The actuator 3 may be used to adjust the direction that the solar reflector 2 is facing towards. The facing direction of the solar reflector 2 is considered to be the direction that the reflective surface of the solar reflector 2 is facing. The solar lighting system is also provided with an additional actuator 4 in a foot portion of the solar reflector, whereby this additional actuator 4 can be used to rotate the solar reflector 2 (or the whole system 1) around a vertical axis. The actuator 3 may be a linear actuator, and the actuator 4 in the foot portion of the solare reflector may be a motor which provides a rotational movement. Alternatively the system can comprise one actuator or actuating device capable of moving the solar reflector in all relevant directions (rotational and translational).

The solar lighting system 1 further includes a solar collector 5 which is arranged to receive reflected solar rays 22 from the solar reflector 2, i.e. solar rays that are reflected by the solar reflector 2. The solar collector 5 includes a plurality of light guides 6, e.g. optical fibers, arranged in a light guide array as can be seen in the enlarged view of the solar collector 5. The solar collector 5 has a light receiving surface 7 which is a surface of the solar collector 5 intended to receive the reflected light rays 22. The light receiving surface 7 includes an entry point 8 for each light guide 6 in the solar collector 5. Moreover, the enlarged perspective view of the solar collector 5 illustrates a hexagonal packing structure of the light guides 6. By using a hexagonal packing structure one can provide a higher ratio of light guides per area unit on the light receiving surface 7 of the solar collector 5, and thereby increase the overall efficiency of the system 1. The light guides 6 direct the light from the solar collector to a room or area in a building which is to be illuminated by the reflected solar light received by the solar collector 5.

A control unit 9 is schematically illustrated connected to the actuator 3. If there are more than one actuator in the system for controlling the movement of the solar reflector they can each be provided with a separate control unit 9, or they can all be connected to a common control unit 9. The control unit 9 is preferably realized as a software controlled processor. However, the control unit 9 may alternatively be realized wholly or partly in hardware.

A solar light sensor 10 is arranged to face the same direction as the solar reflector 2. The solar light sensor 10 is preferably configured to detect a position of the sun based on a direction of the incident solar rays 21, and to generate a direction signal (i.e. a signal indicative of the direction of the solar rays and thus the position of the sun) to the control unit 9. The solar light sensor 10 is preferably wirelessly connected to the control unit 9; however, a physical connection via a wire is also feasible. The control unit 9 is further configured to adjust the position of the solar reflector 2, based on information derived from the received direction signal, by controlling the actuator 3. The solar light sensor 10 can for example be a position sensitive device/detector (PSD) that can measure a position of a light spot in two dimensions on a sensor surface, where this sensor surface is arranged to face the same direction as the solar reflector 2. The solar light sensor 10 is in this illustration indirectly attached to the solar reflector via a supporting body that in turn is attached to a back portion of the solar reflector. However, the solar light sensor 10 may be directly mounted on the solar reflector 2 in other embodiments of the system 1, and in further embodiments they may be completely detached from each other as long as the solar light sensor 10 is arranged to face the same direction as the solar reflector 2.

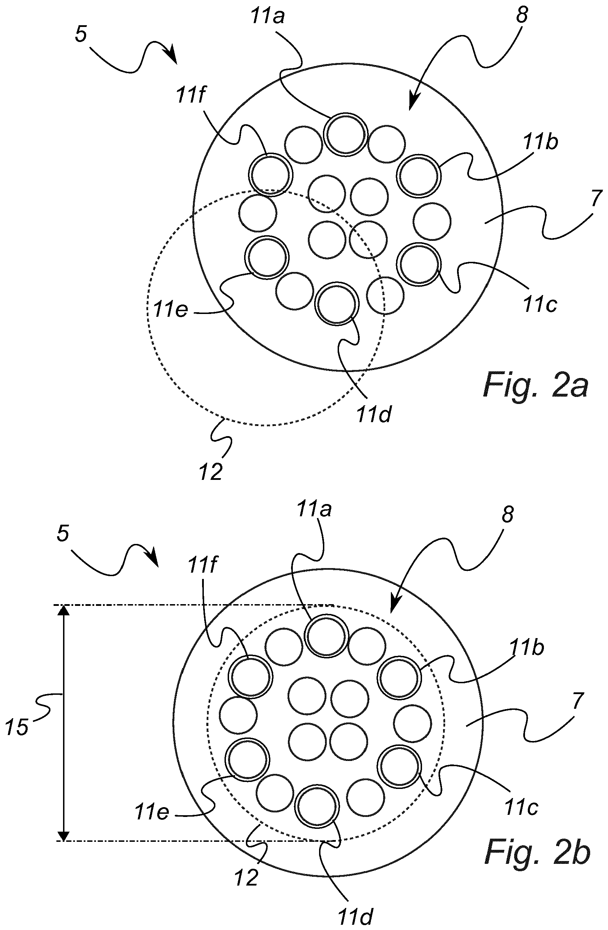

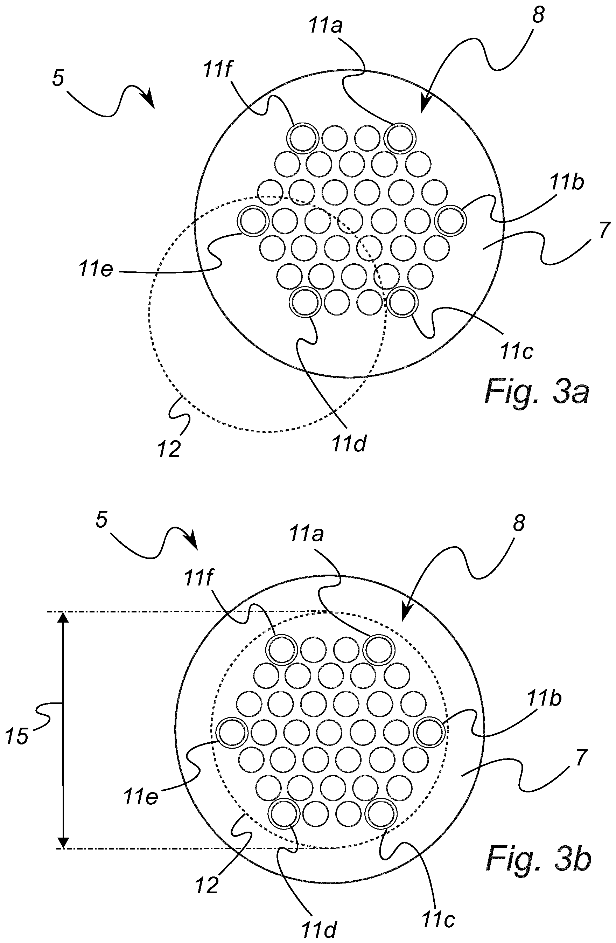

The solar collector 5 includes, as mentioned, a plurality of light guides 6 arranged in a light guide array. Moreover, the system 1 further comprises two (or more) calibration sensors 11a-f arranged in separate peripheral light guides, as indicated by reference numerals 11a-f. Peripheral light guides are in the present context to be understood as the light guides arranged at a peripheral position in the light guide array, i.e. the light guides positioned at the outer edge. This terminology will however be further clarified with reference to Figs. 2a-b and Figs. 3a-b. The calibration sensors 11 are light sensors (or also called photo detectors) configured to detect an intensity of light. Each calibration sensor 11 is operatively connected to the control unit 9, either by a wired physical connection or wirelessly, in order to be able to generate a calibration signal to the control unit 9. The calibration signal is preferably a signal indicative of an intensity of light being detected by each calibration sensor 11.

Based on the calibration signals, the control unit 9 is further configured to calibrate the solar light sensor 10. The control unit 9 may 'calibrate' the solar light sensor 10 by utilizing a bias, or offset, based on the signals received from the calibrations sensors 11a-f. In essence, the control unit 9 calibrates the direction signal generated by the solar light sensor 10. Hence, the control unit 9 can determine when a reflected bright spot is covering all of the entry points of the light guides 6 of the light receiving surface 7, i.e. when all of the light guides 6 are receiving light. This is because the position of the solar collector 5 is positioned relative to the focal point of the reflected light, and particularly the position of the solar collector's light receiving surface 7 is chosen such that the resulting bright spot on the light receiving surface 7, when the solar reflector is correctly directed, cover the light guides 6. The size of the bright spot may be controlled such that it covers all of the entry points of the light guides 6. Thus, if the all of the calibration sensors 11a-f are indicating that they are receiving light, the control unit 9 can determine that all of the light guides 6 are receiving light.

The number of calibration sensors 11 is optional; however, the number of calibration sensors 11 affects other system requirements, such as sensitivity/cost of the calibration sensors 11 and the complexity of a calibration procedure controlled by the control unit 9. In one exemplary embodiment, the solar light system 1 includes at least three calibration sensors, 11a, 11c, 11e, arranged in separate peripheral light guides 6. These calibration sensors can be relatively basic photo detectors capable of merely generating a binary output, (either light is detected or not), where the control unit 9 is configured to assume that once all of the three calibration sensors are receiving light then all of the light guides are receiving light, and calibrate the solar light sensor 10 accordingly. The solar lighting system may in another exemplary embodiment comprise six calibration sensors 11 a-f, arranged in separate peripheral light guides 6, preferably at a maximum separation from each other as illustrated in the Fig. 1, where they light guides 6 are for example arranged in a hexagonal packing structure as shown. By using six calibration sensors 11a-f, very basic and cost-efficient photo detectors can be used as calibration sensors 11a-f and the whole solar lighting system can be made very robust and cost-efficient.

Alternatively, the system 1 may comprise only two calibration sensors 11a, 11b which are arranged in separate peripheral light guides 6 at opposing sides of the light guide array. These two calibration sensors are preferably capable of detecting a maximum intensity, in order to calibrate the solar light sensor 10. Specifically, the control unit 9 is configured to assume when both of the calibration sensors are detecting a maximum intensity, then all of the light guides are receiving light. Alternatively, the calibration sensors 11 can be arranged at other (predefined) peripheral positions, such as e.g. calibration sensors 11a and 11c, and be configured to detect the outer edges of a bright spot by sweeping the bright spot across the light receiving surface in two perpendicular directions (i.e. an x- and a y-direction). The control unit 9 can then be configured to calibrate the solar light sensor 10 according to the derived position and size of the bright spot.

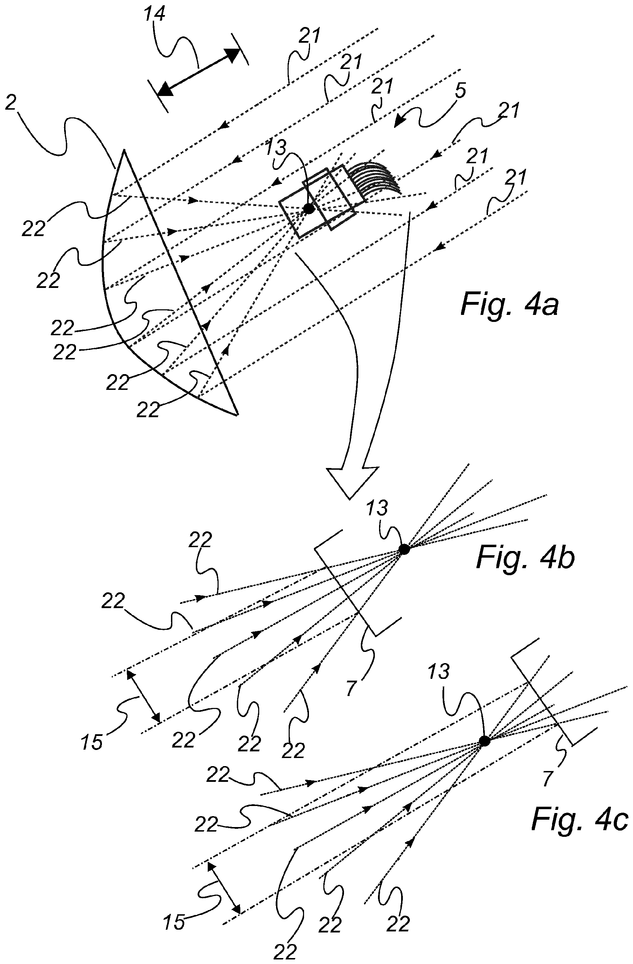

Fig. 2a shows a front view of a light receiving surface 7 of a solar collector 5. There is furthermore a plurality of entry points 8 of light guides disposed on the light receiving surface 7. Fig. 2a serves to illustrate a step in a calibration sequence in accordance with an embodiment of the present invention. The solar rays that are reflected by the solar reflector (2 in Fig. 1) forms a bright spot 12, as indicated by the dashed circle; the size 15 of the bright spot 12 is controlled by adjusting the position of the solar collector's light receiving surface, i.e. moving it closer to or further from a focal point of the solar reflector as will be described further with reference to Figs. 4a-c. In Fig. 2a, there are furthermore six calibration sensors 11a-f arranged in separate peripheral light guides. Here the bright spot only covers a portion of the entry points 8 disposed on the light receiving surface 7, and the calibration signal sent by each calibration signal 11a-f to the control unit indicates that only two of the calibration sensors 11d, 11e are detecting light. Thus it is concluded in the control unit that not all of the light guides are receiving light. The position of the solar reflector is therefore adjusted by changing its facing direction, which consequently moves the bright spot 12 in reference to the light receiving surface 7 of the solar collector 5, as indicated in Fig. 2b.

In more detail, Fig. 2b illustrates a subsequent or final position of the solar reflector 2 in reference to the incident solar rays, where the bright spot 12 covers all of the entry points 8 of the light guides, i.e. all of the light guides are receiving light. In this position all of the calibration sensors 11a-f indicates that they are all detecting an intensity of solar light and the control unit can determine that every light guide is receiving light. Whereby the control unit is configured to determine that the solar reflector is facing directly towards the sun and the solar light sensor, or control unit, is calibrated.

Figs. 3a-b illustrates a calibration sequence that is to a great extent analogous to the one described in reference to Figs. 2a-b, and is for the sake of brevity not described in detail. However, in the embodiment illustrated in Figs. 3a-b the light guides are arranged in a hexagonal packing structure in order to increase the number of light guides per area unit. Furthermore, the calibration sensors 11a-f are arranged in separate peripheral light guides, and more specifically in separate peripheral light guides maximally separated from each other, i.e. in each of the six corners of the hexagonally shaped outer rim.

Further, in reference to the placement of the calibration sensors 11, an alternative would be to place the calibration sensors outside the light guide array, somewhere on the light receiving surface of the solar collector, and adjacent to the entry points of separate peripheral light guides. The calibration sensors and the light guides not being in physical contact with each other.

Fig. 4a shows a schematic side view of a solar reflector and an associated solar collector 5, and more particularly their position in reference to each other, in accordance with an embodiment of the present invention. The solar reflector 2 is a concentrating solar reflector configured to reflect incident solar rays 21 towards a focal point 13. The solar collector 5 or more specifically the light receiving surface 7 of the solar collector 5 is arranged between the solar reflector 2 and the focal point 13. As indicated by the double-headed arrow (and also Figs. 4b-c) the solar collector can be positioned at different distances from the solar reflector 2 in order to control the size 15 of the bright spot (12 in Figs. 2a-b and Figs. 3a-b).

Further, Fig. 4b shows an enlarged view of the setup in Fig. 4a, further illustrating the placement of the light receiving surface 7 in reference to the focal point 13. By placing the light receiving surface further away from the focal point 13, and closer towards the reflective surface of the solar reflector the size of the bright spot would be increased, as indicated by the double-headed arrow 15. Similarly, the diameter 15 or size 15 of the bright spot would decrease if the light receiving surface 7 is positioned closer towards the focal point.

Fig. 4c shows an alternative to the embodiment illustrated in Fig. 4b, where the light receiving surface is positioned behind the focal point 13 in reference to the solar reflector 2. The size of the bright spot, as indicated by the double-headed arrow 15, can be controlled in an analogous manner as described in reference to Figs. 4a-b, i.e. by moving the light receiving surface 7 further from or closer to the focal point 13.

By arranging the light receiving surface (and consequently the entry points of the light guides) as described above, i.e. at a particular distance from the solar reflector 2, one can effectively control the size of the bright spot reflected towards the solar collector and thereby easily adjust it according to the size of the solar lighting system and the intended application.

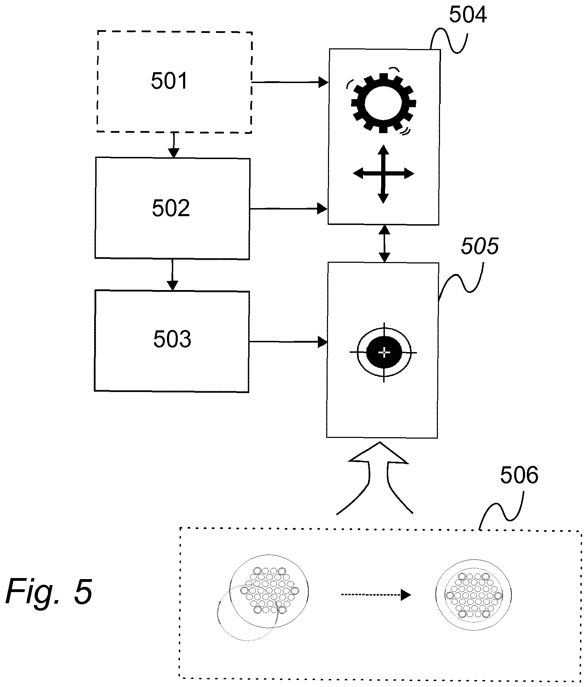

In Fig. 5 a schematic flow chart of a method for calibration and control of a solar lighting system is illustrated. The method may include an optional initial calculating step 501, whereby an expected position of the sun based on at least one of a time of day, a date, a latitudinal position of the solar lighting system and a longitudinal position of the solar lighting system is determined. This may serve as an initial rough assessment of the suns position in reference to the solar lighting system and the solar reflector can be moved 504 such that it faces the sun based on the expected position of the sun. This can e.g. be useful during cloudy days where the solar light sensor may have difficulties detecting a position of the sun based on a direction of incident solar rays. Also, it may be useful to properly align the solar reflector before sunrise. The geographical position may be received using a GPS-chip or the like.

Continuingly, a direction of incident solar rays is detected 502 in a subsequent step, e.g. by the solar light detector (10 in Fig. 1). The solar light sensor is preferably a PSD which detects an angular deviation of incident solar rays in reference to a direction normal to the sensor surface. Since the solar light detector is arranged to face the same direction as the solar reflector, the solar reflector is accordingly moved 504 until this angular deviation is 0 (or (0, 0) in two dimensional coordinate system). Next, an intensity of solar light is detected 503 by at least two calibration sensors arranged in at least two separate peripheral light guides. The calibration sensors are arranged to generate a calibration signal indicative of the detected light, and the solar light sensor is accordingly calibrated in a subsequent calibration step 505. An exemplifying calibration procedure, as in Figs. 3a-b, is shown in the dotted square 506, where the leftmost illustration in the square 506 shows how only some of the calibration sensors are receiving light, and the solar reflector is accordingly moved 504 until all of the calibration sensors are receiving light as in the rightmost illustration in the square 506. Once all of the calibration sensors generate calibration signals that are indicating that all of them are receiving light, the solar light sensor (PSD) is calibrated. The calibration in this context refers to that the position in which all of the solar light sensors are receiving light is set to be the position in which the solar light sensor detects an angular deviation of 0 degrees, i.e. the direction of the incident solar rays in reference to the normal vector of the solar light sensors sensor surface is (0, 0).

The system can operate according to this method throughout an entire day and accurately track the position of the sun and thereby ensure that all of the light guides are illuminated/receiving light throughout the entire day.

## Claims

1. A solar lighting system (1) comprising:
a solar reflector (2) for reflecting incident solar rays (21);
an actuator (3) configured to move said solar reflector in order to change a direction that said solar reflector is facing;
a solar collector (5) arranged to receive reflected solar rays (22) from the solar reflector, said solar collector comprising a light guide array comprising at least two light guides (6) configured to direct the light from the solar collector to a room or area in a building which is to be illuminated by the reflected solar light received by the solar collector;
a control unit (9) connected to said actuator;
a solar light sensor (10) connected to said control unit (9), wherein the solar light sensor is arranged to face the same direction as said solar reflector (2), said solar light sensor being configured to detect a position of the sun based on a direction of said incident solar rays (21) in order to generate a direction signal, wherein said control unit (9) is configured to control said actuator based on said direction signal such that said solar reflector is facing towards the sun; **characterised by** at least one calibration sensor (11 a-f) being connected to said control unit (9) and arranged in optical contact with one of said at least two light guides (6), wherein the at least one calibration sensor is configured to detect an intensity of light received by said light guide and generate a calibration signal to said control unit; and
by said control unit being configured to calibrate said direction signal based on said calibration signal, in order to ensure that the light guides of the solar collector receive light.

2. The solar lighting system (1) according to claim 1, wherein said solar reflector (2) is a concentrating solar reflector configured to reflect incident solar rays towards a focal point (13).

3. The solar lighting system (1) according to claim 2, wherein said solar collector includes a light receiving surface (7) comprising an entry point (8) for each light guide and wherein said light receiving surface is arranged between said concentrating solar reflector and said focal point (13).

4. The solar lighting system (1) according to claim 2 or 3, wherein said concentrating solar reflector is a concave solar reflector having a parabolic shape.

5. The solar lighting system (1) according to any one of the preceding claims, comprising at least two calibration sensors (11 a-f) each arranged in optical contact with separate light guides (6) of said at least two light guides, wherein each calibration sensor is configured to detect an intensity of light and to generate a calibration signal to said control unit (9), wherein said control unit is configured to calibrate said direction signal based on said calibration signal.

6. The solar lighting system (1) according to any one of the preceding claims, wherein said light guide array comprises at least three light guides (6), and wherein the solar lighting system comprises at least three calibration sensors (11 a-f) each arranged in optical contact with separate light guides arranged on the periphery of said light guide array,
wherein each calibration sensor is configured to detect an intensity of light and to generate a calibration signal to said control unit, wherein said control unit is configured to calibrate said direction signal based on said calibration signal.

7. The solar lighting system (1) according to claim 5 or 6, wherein said light guide array comprises at least seven light guides (6) arranged in a hexagonal packing structure.

8. The solar lighting system (1) according to any one of the preceding claims, wherein said control unit (9) comprises processing circuitry configured to calculate a solar path and determine an expected position of the sun based on at least one of a time of day, a date, a latitudinal position of the solar lighting system and a longitudinal position of the solar lighting system (1), and wherein the control unit is further configured to control said actuator (3) based on the determined position of the sun such that said solar reflector (2) is facing towards the expected position of the sun.

9. A method for calibration and control of a solar lighting system (1) comprising a solar reflector (2) for reflecting incident solar rays, a solar light sensor (10), and a solar collector (5) arranged to receive solar rays reflected by the solar reflector, wherein the solar collector comprises a light guide array comprising at least two light guides (6) configured to direct the light from the solar collector to a room or area in a building which is to be illuminated by the reflected solar light received by the solar collector, the method **being characterized by**:
detecting (502) a direction of the incident solar rays by means of the solar light sensor (10) and providing a direction signal indicative of the direction of the incident solar rays;
moving (504) the solar reflector based on the direction signal in order to arrange the solar reflector (2) such that the solar reflector is facing towards the sun;
detecting (503) an intensity of light received by at least one light guide (6) in the solar collector;
calibrating (505) the direction signal based on the detected intensity of light received by said at least one light guide in the solar collector, in order to ensure that each light guide of the at least two light guides receives solar light.

10. The method according to claim 9, wherein the step of detecting (503) an intensity of light comprises detecting an intensity of light received by at least two separate light guides (6) in the solar collector (5), and
wherein the step of calibrating (505) the direction signal comprises calibrating the direction signal based on the detected intensity of light received by said at least two separate light guides in the solar collector (5), in order to ensure that each light guide of the at least two light guides receives solar light.

11. The method according to claim 9, wherein the light guide array includes at least three light guides (6) and the step of detecting (503) an intensity of light comprises detecting an intensity of light received by at least three separate peripheral light guides in the solar collector, and
wherein the step of calibrating (505) the direction signal comprises calibrating the direction signal based on the detected intensity of light received by said at least three separate peripheral light guides in the solar collector (5), in order to ensure that each light guide of the at least three light guides receives solar light.

12. The method according to any one of claims 9 to 11, further comprising:
calculating (501) a solar path and determining an expected position of the sun based on at least one of a time of day, a date, a latitudinal position of the solar lighting system and a longitudinal position of the solar lighting system (1);
moving (504) said solar reflector (2) based on the expected position of the sun in order to arrange said solar reflector such that said solar reflector is facing towards the sun.

## Patentansprüche

1. Solarbeleuchtungssystem (1), umfassend:
einen Sonnenreflektor (2) zum Reflektieren einfallender Sonnenstrahlen (21);
ein Stellglied (3), das konfiguriert ist, den Sonnenreflektor zu bewegen, um eine Richtung, der der Sonnenreflektor zugewandt ist, zu verändern;
einen Sonnenkollektor (5), der angeordnet ist, um reflektierte Sonnenstrahlen (22) von dem Sonnenreflektor zu empfangen, wobei der Sonnenkollektor eine Lichtleiteranordnung umfasst, die mindestens zwei Lichtleiter (6) umfasst, die konfiguriert sind, das Licht von dem Sonnenkollektor zu einem Raum oder einem Bereich in einem Gebäude zu lenken, der durch das reflektierte Sonnenlicht, das von dem Sonnenkollektor empfangen wird, beleuchtet werden soll;
eine Steuereinheit (9), die mit dem Stellglied verbunden ist;
einen Sonnenlichtsensor (10), der mit der Steuereinheit (9) verbunden ist, wobei der Sonnenlichtsensor so angeordnet ist, dass er der gleichen Richtung wie der Sonnenreflektor (2) zugewandt ist,
wobei der Sonnenlichtsensor konfiguriert ist, basierend auf einer Richtung der einfallenden Sonnenstrahlen (21) eine Position der Sonne zu erfassen, um ein Richtungssignal zu erzeugen, wobei die Steuereinheit (9) konfiguriert ist, das Stellglied basierend auf dem Richtungssignal derart zu steuern, dass der Sonnenreflektor der Sonne zugewandt ist;
**gekennzeichnet**
**durch** mindestens einen Kalibrierungssensor (11a-f), der mit der Steuereinheit (9) verbunden ist und in optischem Kontakt mit einem der mindestens zwei Lichtleiter (6) angeordnet ist, wobei der mindestens eine Kalibrierungssensor konfiguriert ist, eine Intensität des Lichts, das von dem Lichtleiter empfangen wird, zu erfassen und ein Kalibrierungssignal an der Steuereinheit zu erzeugen; und
**durch** die Steuereinheit, die konfiguriert ist, das Richtungssignal basierend auf dem Kalibrierungssignal zu kalibrieren, um sicherzustellen, dass die Lichtleiter des Sonnenkollektors Licht empfangen.

2. Solarbeleuchtungssystem (1) nach Anspruch 1, wobei der Sonnenreflektor (2) ein konzentrierender Sonnenreflektor ist, der konfiguriert ist, einfallende Sonnenstrahlen zu einem Brennpunkt (13) zu reflektieren.

3. Solarbeleuchtungssystem (1) nach Anspruch 2, wobei der Sonnenkollektor eine Lichtempfangsfläche (7) umfasst, die einen Eintrittspunkt (8) für jeden Lichtleiter umfasst und wobei die Lichtempfangsfläche zwischen dem konzentrierenden Sonnenreflektor und dem Brennpunkt (13) angeordnet ist.

4. Solarbeleuchtungssystem (1) nach Anspruch 2 oder 3, wobei der konzentrierende Sonnenreflektor ein konkaver Sonnenreflektor mit einer parabolischen Form ist.

5. Solarbeleuchtungssystem (1) nach einem der vorhergehenden Ansprüche, das mindestens zwei Kalibrierungssensoren (11a-f) umfasst, die jeweils in optischem Kontakt mit getrennten Lichtleitern (6) der mindestens zwei Lichtleiter angeordnet sind, wobei jeder Kalibrierungssensor konfiguriert ist, eine Lichtintensität zu erfassen und ein Kalibrierungssignal an der Steuereinheit (9) zu erzeugen, wobei die Steuereinheit konfiguriert ist, das Richtungssignal basierend auf dem Kalibrierungssignal zu kalibrieren.

6. Solarbeleuchtungssystem (1) nach einem der vorhergehenden Ansprüche, wobei die Lichtleiteranordnung mindestens drei Lichtleiter (6) umfasst, und wobei das Solarbeleuchtungssystem mindestens drei Kalibrierungssensoren (11a-f) umfasst, die jeweils in optischem Kontakt mit getrennten Lichtleitern angeordnet sind, die auf dem Umfang der Lichtleiteranordnung angeordnet sind,
wobei jeder Kalibrierungssensor konfiguriert ist, eine Lichtintensität zu erfassen und ein Kalibrierungssignal an der Steuereinheit zu erzeugen, wobei die Steuereinheit konfiguriert ist, das Richtungssignal basierend auf dem Kalibrierungssignal zu kalibrieren.

7. Solarbeleuchtungssystem (1) nach Anspruch 5 oder 6, wobei die Lichtleiteranordnung mindestens sieben Lichtleiter (6) umfasst, die in einer hexagonalen Packungsstruktur angeordnet sind.

8. Solarbeleuchtungssystem (1) nach einem der vorhergehenden Ansprüche, wobei die Steuereinheit (9) Verarbeitungsschaltungen umfasst, die konfiguriert sind, um eine Sonnenbahn zu berechnen und eine erwartete Position der Sonne basierend auf mindestens einem von einer Tageszeit, einem Datum, einer Breitenposition des Solarbeleuchtungssystems und einer Längenposition des Solarbeleuchtungssystems (1) zu bestimmen, und wobei die Steuereinheit ferner konfiguriert ist, das Stellglied (3) basierend auf der bestimmten Position der Sonne so zu steuern, dass der Sonnenreflektor (2) der erwarteten Position der Sonne zugewandt ist.

9. Verfahren zur Kalibrierung und Steuerung eines Solarbeleuchtungssystems (1), das einen Sonnenreflektor (2) zum Reflektieren einfallender Sonnenstrahlen, einen Sonnenlichtsensor (10) und einen Sonnenkollektor (5), der angeordnet ist, um Sonnenstrahlen, die durch den Sonnenreflektor reflektiert werden, aufzunehmen, umfasst, wobei der Sonnenkollektor eine Lichtleiteranordnung umfasst, die mindestens zwei Lichtleiter (6) umfasst, die konfiguriert sind, das Licht von dem Sonnenkollektor zu einem Raum oder einem Bereich in einem Gebäude zu leiten, der durch reflektiertes Sonnenlicht, das von dem Sonnenkollektor empfangen wird, beleuchtet werden soll,
wobei das Verfahren **gekennzeichnet ist, durch**:
Erfassen (502) einer Richtung der einfallenden Sonnenstrahlen unter Verwendung des Sonnenlichtsensors (10) und Bereitstellen eines Richtungssignals, das die Richtung der einfallenden Sonnenstrahlen anzeigt;
Bewegen (504) des Sonnenreflektors basierend auf dem Richtungssignal, um den Sonnenreflektor (2) so anzuordnen, dass der Sonnenreflektor der Sonne zugewandt ist;
Erfassen (503) einer Intensität des Lichts, das von mindestens einem Lichtleiter (6) in dem Sonnenkollektor empfangen wird;
Kalibrieren (505) des Richtungssignals basierend auf der erfassten Intensität des Lichts, das von dem mindestens einen Lichtleiter in dem Sonnenkollektor empfangen wird, um zu gewährleisten, dass jeder Lichtleiter der mindestens zwei Lichtleiter Sonnenlicht empfängt.

10. Verfahren nach Anspruch 9, wobei der Schritt des Erfassens (503) einer Lichtintensität das Erfassen einer Intensität von Licht, das von mindestens zwei getrennten Lichtleitern (6) in dem Sonnenkollektor (5) empfangen wird, umfasst, und
wobei der Schritt des Kalibrierens (505) des Richtungssignals das Kalibrieren des Richtungssignals basierend auf der erfassten Intensität des Lichts, das von den mindestens zwei getrennten Lichtleitern in dem Sonnenkollektor (5) empfangen wird, umfasst, um zu gewährleisten, dass jeder Lichtleiter der mindestens zwei Lichtleiter Sonnenlicht empfängt.

11. Verfahren nach Anspruch 9, wobei die Lichtleiteranordnung mindestens drei Lichtleiter (6) umfasst und der Schritt des Erfassens (503) einer Lichtintensität das Erfassen einer Intensität von Licht, das von mindestens drei getrennten peripheren Lichtleitern in dem Sonnenkollektor empfangen wird, umfasst, und
wobei der Schritt des Kalibrierens (505) des Richtungssignals das Kalibrieren des Richtungssignals basierend auf der erfassten Intensität des Lichts, das von den mindestens drei getrennten peripheren Lichtleitern in dem Sonnenkollektor (5) empfangen wird, umfasst, um zu gewährleisten, dass jeder Lichtleiter der mindestens drei Lichtleiter Sonnenlicht empfängt.

12. Verfahren nach einem der Ansprüche 9 bis 11, ferner umfassend:
Berechnen (501) einer Sonnenbahn und Bestimmen einer erwarteten Position der Sonne basierend auf mindestens einem von einer Tageszeit, einem Datum, einer Breitenposition des Solarbeleuchtungssystems und einer Längenposition des Solarbeleuchtungssystems (1);
Bewegen (504) des Sonnenreflektors (2) basierend auf der erwarteten Position der Sonne, um den Sonnenreflektor so anzuordnen, dass der Sonnenreflektor der Sonne zugewandt ist.

## Revendications

1. Système d'éclairage solaire (1) comprenant :
un réflecteur solaire (2) pour réfléchir des rayons solaires incidents (21) ;
un actionneur (3) configurée pour déplacer ledit réflecteur solaire de manière à changer une direction à laquelle ledit réflecteur solaire fait face ;
un collecteur solaire (5) agencé pour recevoir les rayons solaires réfléchis (22) provenant du réflecteur solaire, ledit collecteur solaire comprenant un réseau de guide de lumière comprenant au moins deux guides de lumière (6) configurés pour diriger la lumière provenant du collecteur solaire vers une pièce ou une zone dans un bâtiment qui doit être illuminé par la lumière solaire réfléchie reçue par le collecteur solaire ;
une unité de commande (9) connectée audit actionneur ;
un capteur de lumière solaire (10) connecté à ladite unité de commande (9), dans lequel le capteur de lumière solaire est agencé pour faire face à la même direction que ledit réflecteur solaire (2),
ledit capteur de lumière solaire étant configuré pour détecter une position du soleil sur la base d'une direction desdits rayons solaires incidents (21) de manière à générer un signal de direction, dans lequel ladite unité de commande (9) est configuré pour commander ledit actionneur sur la base dudit signal de direction de sorte que ledit réflecteur solaire soit en train de faire face au soleil ;
**caractérisé**
**par** au moins un capteur d'étalonnage (11a-f) étant connecté à ladite unité de commande (9) et disposé en contact optique avec un desdits au moins deux guides de lumière (6), dans lequel au moins un capteur d'étalonnage est configuré pour détecter une intensité de lumière reçue par ledit guide de lumière et générer un signal d'étalonnage vers ladite unité de commande ; et
par ladite unité de commande étant configuré pour étalonner ledit signal de direction sur la base dudit signal d'étalonnage, de manière à garantir que les guides de lumière du collecteur solaire reçoivent la lumière.

2. Système d'éclairage solaire (1) selon la revendication 1, dans lequel ledit réflecteur solaire (2) est un réflecteur solaire concentrateur configuré pour réfléchir les rayons solaires incidents vers un point focal (13).

3. Système d'éclairage solaire (1) selon la revendication 2, dans lequel ledit collecteur solaire inclut une surface de réception de lumière (7) comprenant un point d'entrée (8) pour chaque guide de lumière et dans lequel ladite surface de réception de lumière est agencée entre ledit réflecteur solaire concentrateur et ledit point focal (13).

4. Système d'éclairage solaire (1) selon la revendication 2 ou 3, dans lequel ledit réflecteur solaire concentrateur est un réflecteur solaire concave ayant une forme parabolique.

5. Système d'éclairage solaire (1) selon une quelconque des revendications précédentes, comprenant au moins deux capteurs d'étalonnage (11a-f) disposés chacun en contact optique avec des guides de lumière séparés (6) desdits au moins deux guides de lumière, dans lequel chaque capteur d'étalonnage est configuré pour détecter une intensité de lumière et générer un signal d'étalonnage vers ladite unité de commande (9), dans lequel ladite unité de commande est configurée pour étalonner ledit signal de direction sur la base dudit signal d'étalonnage.

6. Système d'éclairage solaire (1) selon une quelconque des revendications précédentes, dans lequel ledit réseau de guide de lumière comprend au moins trois guides de lumière (6) et dans lequel le système d'éclairage solaire comprend au moins trois capteurs d'étalonnage (11a-f) disposée chacun en contact optique avec des guides de lumière séparés disposées sur la périphérie dudit réseau de guide de lumière,
dans lequel chaque capteur d'étalonnage est configuré pour détecter une intensité de lumière et générer un signal d'étalonnage vers ladite unité de commande, dans lequel ladite unité de commande est configurée pour étalonner ledit signal de direction sur la base dudit signal étalonnage.

7. Système d'éclairage solaire (1) selon la revendication 5 ou 6, dans lequel ledit réseau de guide de lumière comprend au moins sept guides de lumière (6) disposés dans une structure de conditionnement hexagonale.

8. Système d'éclairage solaire (1) selon une quelconque des revendications précédentes, dans lequel ladite unité de commande (9) comprend des circuits de traitement configuré pour calculer un trajet solaire et déterminer une position escomptée du soleil sur la base d'au moins une d'une heure du jour, une date, une position de latitude du système d'éclairage solaire et une position de longitude du système d'éclairage solaire (1) et dans lequel l'unité de commande est en outre configurée pour commander ledit actionneur (3) sur la base de la position déterminée du soleil de sorte que ledit réflecteur solaire (2) soit en train de faire face à la position escomptée du soleil.

9. Procédé d'étalonnage et de commande d'un système d'éclairage solaire (1) comprenant un réflecteur solaire (2) pour réfléchir des rayons solaires incidents, un capteur de lumière solaire (10) et un collecteur solaire (5) agencé pour recevoir les rayons solaires réfléchis par le réflecteur solaire, dans lequel le collecteur solaire comprend un réseau de guide de lumière comprenant au moins deux guides de lumière (6) configurés pour diriger la lumière provenant du collecteur solaire vers une pièce ou une zone dans un bâtiment qui doit être illuminé par la lumière solaire réfléchie reçue par le collecteur solaire,
le procédé étant **caractérisé par** :
détecter (502) une direction des rayons solaires incidents au moyen du capteur de lumière solaire (10) et fournir un signal de direction indiquant la direction des rayons solaires incidents ;
déplacer (504) le réflecteur solaire sur la base du signal de direction de manière à disposer le réflecteur solaire (2) de sorte que le réflecteur solaire soit en train de faire face au soleil ;
détecter (503) une intensité de lumière reçue par au moins un guide de lumière (6) dans le collecteur solaire ;
étalonner (505) le signal de direction sur la base de l'intensité de lumière détectée reçue par ledit au moins un guide d'onde dans le collecteur solaire, de manière à garantir que chaque guide de lumière d'au moins deux guides d'onde reçoive la lumière solaire.

10. Procédé selon la revendication 9, dans lequel l'étape de détection (503) d'une intensité de lumière comprend de détecter une intensité de lumière reçue par au moins deux guides de lumière séparés (6) dans le collecteur solaire (5) et
dans lequel l'étape d'étalonnage (505) du signal de direction comprend d'étalonner le signal de direction sur la base de l'intensité de lumière détectée reçue par lesdits au moins deux guides de lumière séparés dans le collecteur solaire (5), de manière à garantir que chaque guide de lumière d'au moins deux guides de lumière reçoive la lumière solaire.

11. Procédé selon la revendication 9, dans lequel le réseau de guide de lumière inclut au moins trois guides de lumière (6) et l'étape de détection (503) d'une intensité de lumière comprend de détecter une intensité de lumière reçue par au moins trois guides de lumière périphériques séparés dans le collecteur solaire et
dans lequel l'étape d'étalonnage (505) du signal de direction comprend d'étalonner le signal de direction sur la base de l'intensité de lumière détectée reçue par lesdits au moins trois guide sde lumière périphériques séparés dans le collecteur solaire (5), de manière à garantir que chaque guide de lumière d'au moins trois guides de lumière reçoive la lumière solaire.

12. Procédé selon une quelconque des revendications 9 à 11, comprenant en outre de :
calculer (501) un trajet solaire et déterminer une position frontale du soleil sur la base d'au moins une d'une heure du jour, une date, une position de latitude du système d'éclairage solaire et une position de longitude du système d'éclairage solaire (1) ;
déplacer (504) ledit réflecteur solaire (2) sur la base de la position escomptée du soleil de manière à disposer ledit réflecteur solaire de sorte que ledit réflecteur solaire soit en train de faire face au soleil.
